# EUROPÄISCHE PATENTANMELDUNG

(11) **EP 4 450 238 A1**
(43) Veröffentlichungstag der Anmeldung: **23.10.2024**
(21) Anmeldenummer: 24164269.3
(22) Anmeldetag: 18.03.2024
(51) Int. Cl.: B25J 9/16

(54) **VERFAHREN ZUM HANDHABEN VON GEGENSTÄNDEN SOWIE HANDHABUNGSANLAGE**

(30) Priorität: 20.04.2023 DE 102023110107
(71) Anmelder: J. Schmalz GmbH, 72293 Glatten (DE)
(72) Erfinder: Krieg, Steffen, 71111 Waldenbuch (DE); Heinzmann, Bernd, 72290 Loßburg (DE)
(74) Vertreter: DREISS Patentanwälte PartG mbB

(57) **Zusammenfassung**

Die Erfindung betrifft ein Verfahren zum Handhaben von in einem Arbeitsbereich (12) angeordneten Gegenständen (13) mittels einer Handhabungsanlage (10), das Verfahren umfassend das Durchführen mehrerer Handhabungszyklen nacheinander, ein jeweiliger Handhabungszyklus umfassend das Erfassen wenigstens eines Bildes des Arbeitsbereichs, das Ermitteln, auf Basis des wenigstens eines Bildes, wenigstens eines Griffpunkt-Kandidaten, an welchem ein jeweiliger Gegenstand mit dem Endeffektor gegriffen werden kann, wobei die ermittelten Griffpunkt-Kandidaten eine Menge Mₑ an Griffpunkt-Kandidaten bilden, Auswählen eines Griffpunkt-Kandidaten als Zielgriffpunkt für den Endeffektor, und Ausführen einer Handhabungsaufgabe umfassend das Anfahren des Endeffektors an den Zielgriffpunkt, wobei zumindest eine Teilmenge Mₑₛ der Menge Mₑ in einem Griffpunkt-Speicher gespeichert wird, wobei zumindest eine Teilmenge Mₜₑₛ der im Griffpunkt-Speicher abgespeicherten Griffpunkt-Kandidaten Mₑₛ zumindest bis zum nächsten Handhabungszyklus gespeichert bleiben, und wobei der Zielgriffpunkt aus einer Menge Mₛ von im Griffpunkt-Speicher gespeicherten Griffpunkt-Kandidaten ausgewählt wird. Die Erfindung betrifft auch eine hierfür ausgebildete Handhabungsanlage.

## Beschreibung

Die Erfindung betrifft ein Verfahren zum Handhaben von Gegenständen sowie eine dafür ausgebildete Handhabungsanlage.

Handhabungsanlagen finden beispielsweise beim Kommissionieren von Waren in Warenlagern Verwendung und dienen dort insbesondere dazu, Warengegenstände aus einem Lagerbehälter (Quellbehälter) mit einer Mehrzahl von Warengegenständen zu greifen (sog. "bin-picking" oder "Griff in die Kiste") und an einen anderen Ort, bspw. in einen Transportbehälter (Zielbehälter), zu verbringen. Solche Handhabungsanlagen umfassen üblicherweise einen Roboter mit einem Roboterarm, an welchem ein Endeffektor zum Greifen eines Gegenstands angeordnet ist.

In diesem Zusammenhang ist es bekannt, den Quellbehälter und die darin aufgenommenen Gegenstände zunächst bildlich zu erfassen und hieraus datentechnisch Griffpunkte zu ermitteln, an welchen der Endeffektor die Gegenstände angreifen kann. Im Anschluss wird einer der ermittelten Griffpunkte ausgewählt. Diesen Griffpunkt fährt dann der Roboter mit seinem Endeffektor an, greift den entsprechenden Gegenstand und verbringt diesen an einen Ablageort in dem Zielbehälter.

Bei der vorstehend beschriebenen Anwendungssituation führt der Roboter die vorstehend beschriebenen Schritte üblicherweise wiederholt durch, um nacheinander eine Mehrzahl von Gegenständen aus dem Quellbehälter in den Zielbehälter zu überführen. Es werden also mehrere Handhabungszyklen nacheinander durchgeführt. Bei diesem seriellen Vorgehen kann es allerdings zu unerwünschten Roboter-Stillstandzeiten kommen, da der Roboter in jedem Zyklus auf das Ergebnis der Griffpunkt-Ermittlung warten muss, bevor er mit einer Handhabungsaufgabe beginnen kann. Dies ist insbesondere dann von Nachteil, wenn eine Roboter-Dynamik sehr schnell ist.

Die Erfindung beschäftigt sich mit der Aufgabe, einen Handhabungsvorgang zu beschleunigen. Insbesondere sollen Gegenstände mit hoher Greifleistung gegriffen und zwischen zwei Orten überführt werden können.

Diese Aufgabe wird durch ein Verfahren mit den Merkmalen des Anspruchs 1 gelöst. Bei dem Verfahren handelt es sich um ein Verfahren zum Handhaben von Gegenständen mittels einer Handhabungsanlage, beispielsweise zum Kommissionieren von Gegenständen. Insbesondere handelt es sich bei dem Verfahren um ein Verfahren zum Handhaben von in einem Arbeitsbereich, insbesondere in einem Quellbehälter, angeordneten Gegenständen mittels einer Handhabungsanlage.

Die Handhabungsanlage umfasst wenigstens einen Roboter, beispielsweise einen Mehr-Achs-Roboter, einen Scara-Roboter oder einen kollaborierenden Leichtbauroboter (Cobot). An dem wenigstens einen Roboter ist ein Endeffektor zum Greifen eines Gegenstands angeordnet. Insbesondere ist der Roboter dazu ausgebildet, den Endeffektor und optional damit gegriffene Gegenstände zu verlagern. Bei dem Endeffektor kann es sich insbesondere um eine Sauggreifvorrichtung handeln.

Die Handhabungsanlage umfasst außerdem eine Detektionseinrichtung bzw. Erkennungseinrichtung zum Erfassen des Arbeitsbereichs und insbesondere der darin angeordneten Gegenstände. Die Detektionseinrichtung umfasst wenigstens eine Erfassungseinheit, welche dazu ausgebildet ist, den Arbeitsbereich, insbesondere Quellbehälter, und insbesondere die darin angeordneten Gegenstände mittels eines bildgebenden Verfahrens zu erfassen. Die wenigstens eine Erfassungseinheit ist insofern insbesondere dazu ausgebildet, wenigstens ein Bild, insbesondere 3D-Bild, des Arbeitsbereiches aufzunehmen. Die wenigstens eine Erfassungseinheit ist vorzugsweise als Kamera, insbesondere 3D-Kamera, ausgebildet, bspw. als CCD-Kamera. Es ist auch denkbar, dass die wenigstens eine Erfassungseinheit ein Laserscanner, Ultraschall-Sensor oder Radar-Sensor ist. Es ist auch denkbar, dass die Detektionseinrichtung mehrere Erfassungseinheiten unterschiedlicher Art umfasst. Die Detektionseinrichtung kann außerdem dazu eingerichtet sein, einen Zielbereich, insbesondere Zielbehälter, bildlich zu erfassen. Insofern kann die Detektionseinrichtung wenigstens eine Erfassungseinheit, insbesondere Kamera, aufweisen, welche dazu ausgebildet ist den Zielbereich bildlich zu erfassen. Die Detektionseinrichtung kann an dem Roboter, insbesondere einem Roboterarm des Roboters, gehaltert sein. Die Detektionseinrichtung kann auch von dem Roboter separat bereitgestellt sein. Insbesondere kann die Detektionseinrichtung ortsfest relativ zu dem Arbeitsbereich, insbesondere Quellbehälter, angeordnet sein.

Die Handhabungsanlage umfasst außerdem eine Steuereinrichtung zum Ansteuern der Handhabungsanlage, insbesondere zum Ansteuern des wenigstens einen Roboters und der Detektionseinrichtung. Die Steuereinrichtung umfasst eine Datenverarbeitungsanlage und eine nicht-flüchtige Speichereinrichtung.

Die Handhabungsanlage kann außerdem den vorstehend erwähnten Arbeitsbereich, insbesondere Quellbehälter, umfassen. Insbesondere können in dem Arbeitsbereich, insbesondere Quellbehälter, eine Mehrzahl von Gegenständen vorgesehen sein, insbesondere darin aufgenommen sein. Insofern kann die Handhabungsanlage einen Arbeitsbereich mit einer Mehrzahl von darin angeordneten Gegenständen umfassen. Die Handhabungsanlage kann außerdem einen Zielbereich, insbesondere Zielbehälter, zur Aufnahme von Gegenständen umfassen. Es ist denkbar, dass der Zielbehälter zu Beginn eines Handhabungsvorgangs leer ist. Es ist auch denkbar, dass der Zielbehälter zu Beginn eines Handhabungsvorgangs bereits teilweise gefüllt ist, bspw. mit Gegenständen. Insbesondere kann es sich bei dem Quellbehälter um einen Lagerbehälter handeln und bei dem Zielbehälter kann es sich um einen Transportbehälter, bspw. ein Paketkarton, handeln.

Das Verfahren umfasst das Durchführen mehrerer Handhabungszyklen zeitlich nacheinander.

Ein jeweiliger Handhabungszyklus umfasst die folgenden Schritte:
a) Erfassen, insbesondere Aufnehmen, wenigstens eines Bildes, insbesondere 3D-Bildes, des Arbeitsbereichs, insbesondere Quellbehälters, mittels der Detektionseinrichtung bzw. der wenigstens einen Erfassungseinheit. Hierbei wird insbesondere auch zumindest eine Teilmenge der in dem Arbeitsbereich angeordneten Gegenstände bildlich erfasst. Wie vorstehend erwähnt, kann die Erfassungseinheit als Kamera, insbesondere 3D-Kamera, ausgebildet sein, bspw. als CCD-Kamera. Dann kann das Erfassen des wenigstens einen Bildes das Aufnehmen eines oder mehrerer optischer Bilder des Arbeitsbereichs und der darin angeordneten Gegenstände umfassen. Es ist auch denkbar, dass das Erfassen des wenigstens einen Bildes des Arbeitsbereichs das Abscannen bzw. Abrastern des Arbeitsbereichs und der darin angeordneten Gegenstände umfasst, bspw. mittels eines Laserscanners, eines Ultraschall-Sensors und/oder eines Radar-Sensors. Es ist auch denkbar, dass das Erfassen des wenigstens einen Bildes des Arbeitsbereichs das gleichzeitige oder sequentielle Erfassen eines Bildes des Arbeitsbereichs mittels mehrerer unterschiedlicher Erfassungseinheiten umfasst.
b) Für zumindest eine Teilmenge der in dem Arbeitsbereich angeordneten Gegenstände, insbesondere für die zuvor bildlich erfassten Gegenstände: jeweils Ermitteln wenigstens eines Griffpunkt-Kandidaten, an welchem der jeweilige Gegenstand mit dem Endeffektor gegriffen werden kann. Im vorliegenden Zusammenhang bezeichnet Griffpunkt-Kandidat insbesondere einen möglichen Griffpunkt, an welchem ein Gegenstand mittels des Endeffektors gegriffen werden kann. Ein Griffpunkt bzw. Griffpunkt-Kandidat kann insbesondere durch einen Teilabschnitt einer Außenfläche eines Gegenstands gebildet sein. Wie nachfolgend noch erläutert, bedeutet dies noch nicht, dass der Gegenstand tatsächlich an diesem Griffpunkt-Kandidat gegriffen wird. Das Ermitteln der Griffpunkt-Kandidaten erfolgt auf Basis des wenigstens einen Bildes des Arbeitsbereiches, welches zuvor mittels der Detektionseinrichtung erfasst wurde. Insbesondere werden Bilddaten, welche das wenigstens eine Bild des Arbeitsbereichs repräsentieren, analysiert. Wie nachfolgend noch erläutert, erfolgt das Ermitteln der Griffpunkt-Kandidaten vorzugsweise mittels Methoden der Bildverarbeitung. Die in einem jeweiligen Handhabungszyklus ermittelten Griffpunkt-Kandidaten bilden eine Menge Me an Griffpunkt-Kandidaten. Es ist denkbar, dass für einen Gegenstand mehrere Griffpunkt-Kandidaten ermittelt werden. Es ist auch denkbar, dass für einen Gegenstand nur ein einzelner Griffpunkt-Kandidat ermittelt wird. Es ist denkbar, dass nur für eine Teilmenge der in dem Arbeitsbereich angeordneten Gegenstände Griffpunkt-Kandidaten ermittelt werden oder überhaupt ermittelbar sind (bspw., weil eine Teilmenge der in dem Arbeitsbereich aufgenommenen Gegenstände zunächst nicht durch die Detektionseinrichtung erfassbar ist, z.B. weil diese Gegenstände von anderen Gegenständen bedeckt sind).
c) Auswählen, mittels der Datenverarbeitungsanlage, eines Griffpunkt-Kandidaten als Zielgriffpunkt für den Endeffektor des wenigstens einen Roboters. Im vorliegenden Zusammenhang bezeichnet Zielgriffpunkt insbesondere einen Griffpunkt, den der wenigstens eine Roboter mit dem Endeffektor tatsächlich anfahren soll. Das Auswählen des Zielgriffpunkts erfolgt vorzugsweise rechentechnisch mittels der Datenverarbeitungsanlage. Insbesondere erfolgt das Auswählen eines Griffpunkt-Kandidaten als Zielgriffpunkt unter vorgegebenen oder vorgebbaren Randbedingungen (siehe unten).
d) Durchführen einer Handhabungsaufgabe mittels der Handhabungsanlage, insbesondere mittels des wenigstens einen Roboters. Das Durchführen der Handhabungsaufgabe umfasst insbesondere das Anfahren des Endeffektors an den für ihn ausgewählten Zielgriffpunkt. Insofern wird der wenigstens eine Roboter mittels der Steuereinrichtung insbesondere derart angesteuert, dass der Roboter den Endeffektor an den für ihn ausgewählten Zielgriffpunkt verlagert. Vorzugsweise umfasst das Durchführen der Handhabungsanlaufgabe außerdem das Greifen des entsprechenden Gegenstandes mittels des Endeffektors an dem Zielgriffpunkt, das Verlagern des gegriffenen Gegenstandes mittels des Roboters zu einem Zielbereich und das Ablegen des gegriffenen Gegenstandes an einem Zielablageort des Zielbereichs.

Gemäß dem vorgeschlagenen Verfahren wird zumindest eine Teilmenge Mₑₛ der Menge Mₑ an ermittelten Griffpunkt-Kandidaten in einem Griffpunkt-Speicher der nicht-flüchtigen Speichereinrichtung der Steuereinrichtung gespeichert. Der Griffpunkt-Speicher kann bereits Griffpunkt-Kandidaten aus einem vorherigen Handhabungszyklus umfassen. Insofern kann das Speichern der Griffpunkt-Kandidaten in einem Handhabungszyklus das Hinzufügen dieser Griffpunkt-Kandidaten zu einer Menge von bereits abgespeicherten Griffpunkt-Kandidaten umfassen.

Gemäß dem Verfahren verbleibt zumindest eine Teilmenge Mₜₑₛ der im Rahmen eines Handhabungszyklus im Griffpunkt-Speicher abgespeicherten Griffpunkt-Kandidaten Mₑₛ zumindest bis zum Beginn des nächsten Handhabungszyklus in dem Griffpunkt-Speicher gespeichert, vorzugsweise bis zum Auswählen eines Griffpunkt-Kandidaten als Zielgriffpunkt im Rahmen des nächsten Handhabungszyklus. Die in einem Handhabungszyklus abgespeicherten Griffpunkt-Kandidaten werden insofern insbesondere nicht nach dem Auswählen eines Griffpunkt-Kandidaten als Zielgriffpunkt im Rahmen dieses Handhabungszyklus gelöscht, sondern verbleiben zumindest teilweise in dem Griffpunkt-Speicher bis zum darauffolgenden Handhabungszyklus.

Gemäß dem Verfahren wird der Zielgriffpunkt aus einer Menge Mₛ von im Greifpunkt-Speicher gespeicherten Griffpunkt-Kandidaten ausgewählt. Die Menge Mₛ umfasst insbesondere zumindest die Teilmenge Mₜₑₛ der in einem vorherigen Handhabungszyklus ermittelten Griffpunkt-Kandidaten.

Das vorgeschlagene Verfahren ermöglicht es, Gegenstände auf effiziente Weise mit hoher Greifleistung aus einem Arbeitsbereich zu greifen und insbesondere an einen Zielbereich zu verbringen. Dadurch, dass die in einem Handhabungszyklus ermittelten Griffpunkt-Kandidaten abgespeichert werden und zumindest teilweise bis zum nächsten Handhabungszyklus gespeichert bleiben, kann der Roboter in einem nachfolgenden Handhabungszyklus auf diese Griffpunkt-Kandidaten zurückgreifen. Der Roboter muss also nicht zwangsläufig auf das Ergebnis einer erneuten Ermittlung der Griffpunkt-Kandidaten warten, sondern kann auf Basis von bereits ermittelten Griffpunkt-Kandidaten aus einem vorherigen Handhabungszyklus angesteuert werden. Auf diese Weise können Roboter-Stillstandzeiten reduziert werden. Darüber hinaus ermöglicht es das vorgeschlagene Abspeichern der Griffpunkt-Kandidaten, diese nach vorgegebenen Kriterien zu priorisieren und neu ermittelte Griffpunkt-Kandidaten anhand der gespeicherten Griffpunkt-Kandidaten zu validieren (siehe unten).

Besonders vorteilhaft kann es sein, wenn das Erfassen des wenigstens einen Bildes des Arbeitsbereiches mittels der Detektionseinrichtung und/oder das Ermitteln der Griffpunkt-Kandidaten zeitlich überlappend mit dem Durchführen der Handhabungsaufgabe durch den wenigstens einen Roboter erfolgt. Insofern kann das Erfassen des wenigstens einen Bildes des Arbeitsbereichs und oder das Ermitteln der Griffpunkt-Kandidaten während einer Bewegung des Roboters, insbesondere während einer Bewegung des Roboters zu einem Zielgriffpunkt und/oder zu einem Zielablageort, erfolgen. Das Erfassen des wenigstens einen Bildes des Arbeitsbereichs und/oder das Ermitteln der Griffpunkt-Kandidaten kann insofern parallel, und nicht sequenziell wie im Stand der Technik, erfolgen Dies ist insbesondere dadurch ermöglicht, dass der Roboter, wie vorstehend erwähnt, nicht zwangsläufig auf das Ergebnis einer Griffpunkt-Ermittlung warten muss, sondern auf die Menge Mₛ der im Griffpunkt-Speicher gespeicherten Griffpunkt-Kandidaten zugreifen kann.

Ein Griffpunkt-Kandidat kann insbesondere durch seine Koordinaten (X, Y, Z) und/oder seine Orientierung (A, B, C) in einem Koordinatensystem der Handhabungsanlage charakterisiert sein. Insbesondere können zwei Griffpunkt-Kandidaten dann als identisch identifiziert werden, wenn sie in ihren Koordinaten und/oder ihrer Orientierung übereinstimmen, oder eine Abweichung in einem oder mehreren der Koordinaten oder Orientierung geringer ist als ein jeweiliger vorgegebener Schwellwert. Mit anderen Worten können zwei Griffpunkt-Kandidaten dann als unterschiedlich identifiziert werden, wenn ein Unterschied in einem oder mehreren der Koordinaten oder Orientierungen größer ist als ein jeweils vorgegebener Schwellwert.

Zusätzlich kann ein Griffpunkt-Kandidat Informationen zu dem entsprechenden Gegenstand umfassen bzw. dadurch charakterisiert sein. Insbesondere kann ein Griffpunkt-Kandidat Informationen zu einer Geometrie des Gegenstands und/oder einer Position des Gegenstands in dem Arbeitsbereich umfassen. Insbesondere kann ein Griffpunkt-Kandidat Informationen zu einer Außenfläche des entsprechenden Gegenstands umfassen, bspw. zu deren Koordinaten in einem Koordinatensystem der Handhabungsanlage. Dies ermöglicht eine Segmentierung des Arbeitsbereichs. Insbesondere kann das Ermitteln der Griffpunkt-Kandidaten das Ermitteln einer Außenfläche der zu greifenden Gegenstände, insbesondere das Ermitteln der Koordinaten der Außenfläche in einem Koordinatensystem der Handhabungsanlage oder die Koordinaten einer die Außenfläche beschreibenden Einhüllenden, auf Basis des wenigstens einen Bildes des Arbeitsbereichs, umfassen.

Im Rahmen einer vorteilhaften Weiterbildung ist es denkbar, dass ein Speicherkriterium oder mehrere Speicherkriterien vorgegeben werden und nur diejenigen Griffpunkt-Kandidaten der Menge Mₑ an ermittelten Griffpunkt-Kandidaten in dem Griffpunkt-Speicher der nicht-flüchtigen Speichereinrichtung gespeichert werden, welche das vorgegebene Speicherkriterium oder wenigstens eines oder alle der mehreren vorgegebenen Speicherkriterien erfüllen. Diese Griffpunkt-Kandidaten können dann die vorstehend erwähnte Teilmenge Mₑₛ bilden.

Das Verfahren kann beispielhaft die folgenden zusätzlichen Schritte, insbesondere pro Handhabungszyklus, umfassen:
- Vorgeben eines Speicherkriteriums oder mehrerer Speicherkriterien;
- Prüfen, ob die ermittelten Griffpunkt-Kandidaten Mₑ das Speicherkriterium oder wenigstens eines oder alle der mehreren Speicherkriterien erfüllen;
- Speichern nur derjenigen Griffpunkt-Kandidaten der Menge Mₑ an ermittelten Griffpunkt-Kandidaten in dem Griffpunkt-Speicher, welche das vorgegebene Speicherkriterium oder wenigstens eines oder alle der mehreren Speicherkriterien erfüllen.
- Insbesondere Verwerfen derjenigen Griffpunkt-Kandidaten der Menge Mₑ an ermittelten Griffpunkt-Kandidaten, welche das Speicherkriterium nicht erfüllen bzw. keines der mehreren Speicherkriterien erfüllen.

Gemäß dem Verfahren ist es insofern denkbar, dass nur eine Teilmenge der in einem Handhabungszyklus ermittelten Griffpunkt-Kandidaten auch tatsächlich in dem Griffpunkt-Speicher abgespeichert wird. Auf diese Weise kann bspw. eine Selektion solcher Griffpunkt-Kandidaten erfolgen, welche einen effizienten Handhabungszyklus ermöglichen.

Vorzugsweise handelt es sich bei dem Speicherkriterium um eines der folgenden Speicherkriterien bzw. umfassen die mehreren vorgegebenen Speicherkriterien eines oder mehrere der folgenden Speicherkriterien:
- Griffpunkt-Kandidat wurde noch nicht im Griffpunkt-Speicher gespeichert. Insofern kann für jeden Griffpunkt-Kandidaten der Menge Mₑ an ermittelten Griffpunkt-Kandidaten geprüft werden, ob dieser Griffpunkt-Kandidat bereits im Griffpunkt-Speicher gespeichert wurde, beispielsweise im Rahmen eines vorherigen Handhabungszyklus. Wurde ein Griffpunkt-Kandidat bereits in dem Griffpunkt-Speicher gespeichert, bedeutet dies nicht zwangsläufig, dass dieser Griffpunkt-Kandidat weiterhin in den Griffpunkt-Speicher gespeichert ist. Wie nachfolgend noch erläutert, kann es auch sein, dass dieser Griffpunkt-Kandidat bereits anhand vorgegebener Aussortierkriterien wieder aus dem Griffpunkt-Speicher entfernt wurde.
- Griffpunkt-Kandidat wurde noch nicht als Zielgriffpunkt ausgewählt. Insofern kann für jeden Griffpunkt-Kandidaten der Menge Mₑ an ermittelten Griffpunkt-Kandidaten geprüft werden, ob dieser Griffpunkt-Kandidat bereits als Zielgriffpunkt in einem vorherigen Handhabungszyklus ausgewählt wurde. Insofern kann verhindert werden, dass der Roboter "ins Leere" greift. Wie nachfolgend noch erläutert, ist es insbesondere denkbar, dass bereits als Zielgriffpunkt ausgewählten Griffpunkt-Kandidaten aus dem Griffpunkt-Speicher entfernt werden und in einen Zielgriffpunkt-Speicher der Speichereinrichtung überführt werden. Die in dem Zielgriffpunkt-Speicher aufgenommenen Griff-Kandidaten können insbesondere einer Menge M_{Z} an bereits als Zielgriffpunkt ausgewählten Griffpunkt-Kandidaten bilden. Das Prüfen, ob die in einem Handhabungszyklus ermittelten Griffpunkt-Kandidaten bereits als Zielgriffpunkte ausgewählt wurden, kann insbesondere das Vergleichen der Menge Mₑ an ermittelten Griffpunkt-Kandidaten mit der Menge M_{Z} der bereits als Zielgriffpunkt ausgewählten Griffpunkt-Kandidaten umfassen.
- Griffpunkt-Kandidat liegt innerhalb oder außerhalb eines vorbestimmten Abstands zu bereits im Griffpunkt-Speicher gespeicherten Griffpunkt-Kandidaten. Auf diese Weise kann eine Plausibilitätsprüfung erfolgen, um beispielsweise fehlerhaft berechnete Griffpunkt-Kandidaten auszusortieren bzw. gar nicht erst abzuspeichern.
- Griffpunkt-Kandidat liegt innerhalb oder außerhalb eines vorbestimmten Abstands zu einem oder mehreren bereits als Zielgriffpunkt ausgewählten Griffpunkt-Kandidaten, insbesondere innerhalb oder außerhalb eines vorbestimmten Abstands zu dem letzten als Zielgriffpunkt ausgewählten Griffpunkt-Kandidaten oder den letzten n als Zielgriffpunkt ausgewählten Griffpunkt-Kandidaten (n ist eine natürliche Zahl). Auf diese Weise kann ebenfalls eine Plausibilitätsprüfung erfolgen. Zudem kann eine Greifstrategie optimiert werden, indem bspw. vorzugsweise solche Griffpunkt-Kandidaten, welche örtlich voneinander weit entfernt liegen, gespeichert werden. Es ist auch denkbar, dass vorzugsweise solche Griffpunkt-Kandidaten gespeichert werden, welche örtlich nah beieinanderliegen.

Wie vorstehend erwähnt, können die Griffpunkt-Kandidaten durch ihre Koordinaten und ihre Orientierung in einem Koordinatensystem der Handhabungsanlage charakterisiert sein. Dann kann das Prüfen, ob ein Griffpunkt-Kandidat noch nicht als Zielgriffpunkt ausgewählt wurde bzw. ob ein Griffpunkt-Kandidat noch nicht im Griffpunkt-Speicher vorhanden ist, das Vergleichen der Koordinaten und Orientierung eines neu ermittelten Griffpunkt-Kandidaten mit den Koordinaten und Orientierung der im Griffpunkt-Speicher bereits hinterlegten Griffpunkt-Kandidaten umfassen.

Ein Abstand zwischen zwei Griffpunkt-Kandidaten kann insbesondere aus einer Differenz in den Koordinaten der Griffpunkt-Kandidaten ermittelt werden. Beispielsweise kann es sich bei dem Abstand um eine Länge eines Verbindungsvektors zwischen zwei Griffpunkt-Kandidaten handeln. Wie vorstehend erwähnt, kann ein Griffpunkt-Kandidat auch Informationen zu dem entsprechenden Gegenstand umfassen. Dann ist es auch denkbar, dass es sich bei dem Abstand eines ersten Griffpunkt-Kandidaten von einem zweiten Griffpunkt-Kandidaten um den minimalen Abstand des ersten Griffpunkt-Kandidaten von einer Außenfläche des Gegenstands des zweiten Griffpunkt-Kandidaten handelt, bspw. um die Länge eines entsprechenden Verbindungsvektors von dem ersten Griffpunkt-Kandidaten zu der Außenfläche. Auf diese Weise können bspw. solche Griffpunkt-Kandidaten der Menge Mₑ an ermittelten Griffpunkt-Kandidaten aussortiert oder gar nicht erst abgespeichert werden, die zu nah an einem benachbarten Gegenstand liegen, bspw. so nah, dass es beim Anfahren des Griffpunkt-Kandidaten mit dem Endeffektor zu unerwünschter Kollision des Endeffektors mit dem benachbarten Gegenstand kommen würde.

Es ist auch denkbar, dass ein Ablehnkriterium vorgegeben wird oder mehrere Ablehnkriterien vorgegeben werden, wobei nur diejenigen Griffpunkt-Kandidaten der Menge Mₑ an ermittelten Griffpunkt-Kandidaten in dem Griffpunkt-Speicher gespeichert werden, welche das Ablehnkriterium nicht erfüllen oder keines der mehreren vorgegebenen Ablehnen Kriterien erfüllen. Bei dem Ablehnkriterium kann es sich bspw. um eines der folgenden Ablehnkriterien handeln bzw. die mehreren Ablehnkriterien können ein oder mehrere der folgenden Ablehnkriterien umfassen:
- Griffpunkt-Kandidat wurde bereits als Zielgriffpunkt ausgewählt.
- Griffpunkt-Kandidat wurde bereits im Griffpunkt-Speicher gespeichert (Griffpunkt-Kandidat kann immer noch Teil der Menge Mₛ der im Griffpunkt-Speicher gespeicherten Griffpunkte sein. Es ist auch denkbar, dass der Griffpunkt-Kandidat bereits aus dem Griffpunkt-Speicher entfernt wurde);
- Griffpunkt-Kandidat liegt außerhalb oder innerhalb eines vorbestimmten Abstands zu bereits im Griffpunkt-Speicher gespeicherten Griffpunkt-Kandidaten.
- Griffpunkt-Kandidat liegt außerhalb oder innerhalb eines vorbestimmten Abstands zu einem oder mehreren bereits als Zielgriffpunkt ausgewählten Griffpunkt-Kandidaten, insbesondere außerhalb eines vorbestimmten Abstands zu dem letzten als Zielgriffpunkt ausgewählten Griffpunkt-Kandidaten oder den letzten n als Zielgriffpunkt ausgewählten Griffpunkt-Kandidaten.

Die Griffpunkt-Kandidaten können dauerhaft in dem Griffpunkt-Speicher gespeichert sein. Vorzugsweise werden die Griffpunkt-Kandidaten jedoch dann, insbesondere nur dann, aus dem Griffpunkt-Speicher entfernt, wenn sie ein vorgegebenes Aussortierkriterium oder wenigstens eines oder alle von mehreren vorgegebenen Aussortierkriterien erfüllen. Dies ermöglicht es, die im Griffpunkt-Speicher gespeicherten Griffpunkt-Kandidaten (aus denen ein Zielgriffpunkt ausgewählt wird) fortlaufend zu aktualisieren und auf dem neuesten Stand zu halten. Insbesondere können solche Griffpunkt-Kandidaten aussortiert werden, welche nicht mehr verfügbar sind, beispielsweise, weil sie bereits als Zielgriffpunkt ausgewählt wurden oder weil sich ein entsprechender Gegenstand verschoben hat (z.B. infolge eines zuvor durchgeführten Greifvorgangs).

Insbesondere kann das Verfahren, insbesondere in jedem Handhabungszyklus, zusätzlich die folgenden Schritte umfassen:
- Vorgeben eines Aussortierkriteriums oder mehrerer Aussortierkriterien;
- Prüfen, insbesondere kontinuierlich oder regelmäßig in vorgegebenen Abständen, beispielsweise nach jedem Handhabungszyklus, ob die im Griffpunkt-Speicher gespeicherten Griffpunkt-Kandidaten das vorgegebene Aussortierkriterium oder wenigstens eines oder alle der mehreren vorgegebenen Aussortierkriterien erfüllen;
- Entfernen derjenigen Griffpunkt-Kandidaten aus der Menge Mₛ der im Griffpunkt-Speicher gespeicherten Griffpunkt-Kandidaten, welche das vorgegebene Aussortierkriterium oder wenigstens eines oder alle der mehreren vorgegebenen Aussortierkriterien erfüllen.

Es ist möglich, dass das Entfernen eines Griffpunkt-Kandidaten aus dem Griffpunkt-Speicher das Löschen dieses Griffpunkt-Kandidaten aus der nicht-flüchtigen Speichereinrichtung umfasst. Es ist auch denkbar, dass das Entfernen eines Griffpunkt-Kandidaten aus dem Griffpunkt-Speicher das Verschieben des Griffpunkt-Kandidaten aus dem Griffpunkt-Speicher in einen anderen Speicherort der Speichereinrichtung umfasst.

Bei dem vorgegebenen Aussortierkriterium kann es sich bspw. um eines der folgenden Aussortierkriterien handeln bzw. die mehreren vorgegebenen Aussortierkriterien können eines oder mehrere der folgenden Aussortierkriterien umfassen:
- Griffpunkt-Kandidat wurde bereits als Zielgriffpunkt ausgewählt.
- Griffpunkt-Kandidat ist bereits länger als eine vorgegebene Verweilzeit, insbesondere eine vorgegebene Anzahl an Handhabungszyklen, in dem Griffpunkt-Speicher gespeichert. Insofern können "ältere" Griffpunkt-Kandidaten aus dem Griffpunkt-Speicher entfernt werden. Wie nachfolgend noch näher erläutert, können die Griffpunkt-Kandidaten vorzugsweise in einer Rangliste sortiert werden und vorzugsweise die in der Rangliste obenstehenden Griffpunkt-Kandidaten bevorzugt ausgewählt werden. In diesem Fall kann es sich bei den "älteren" Griffpunkt-Kandidaten insbesondere um nicht präferierte Griffpunkte handeln. Ein Aussortieren dieser nichtpräferierten Griffpunkte trägt weiter zu einer erhöhten Effizienz des Handhabungsvorganges bei.
- Griffpunkt-Kandidat wurde in einem nachfolgenden Handhabungszyklus nicht mehr ermittelt. Insofern kann die Menge Mₛ der im Griffpunkt-Speicher gespeicherten Griffpunkt-Kandidaten in jedem Handhabungszyklus mit der Menge Mₑ der in diesem Handhabungszyklus ermittelten Griffpunkt-Kandidaten verglichen werden und diejenigen Griffpunkt-Kandidaten aus der Menge Mₛ bzw. aus dem Griffpunkt-Speicher entfernt werden, welche in der Menge Mₑ der ermittelten Kandidaten nicht mehr vorhanden ist. Auf diese Weise kann das Risiko weiter reduziert werden, dass der Roboter "ins Leere" greift, da ein noch im Griffpunkt-Speicher befindlicher Griffpunkt-Kandidat nicht mehr zur Verfügung steht( beispielsweise da der entsprechende Gegenstand in Folge eines zuvor durchgeführten Handhabungsvorgangs verrutscht oder umgekippt ist).

Wie vorstehend bereits erwähnt, erfolgt das Auswählen eines Griffpunkt-Kandidaten aus der Menge Mₛ an im Griffpunkt-Speicher gespeicherten Griffpunkt-Kandidaten als Zielgriffpunkt unter einer oder mehrerer Randbedingungen. Insofern können eine Randbedingung oder mehrerer Randbedingungen vorgegeben werden, in Abhängigkeit derer ein Griffpunkt-Kandidat aus der Menge Mₛ an dem Griffpunkt-Speicher gespeicherten Griffpunkt-Kandidaten als Zielgriffpunkt ausgewählt wird.

Bei der Randbedingung kann es sich um eine der folgenden Randbedingungen halten bzw. die mehreren Randbedingungen können eine oder mehreren der folgenden Randbedingungen umfassen:
- Anfahrzeit des Roboters zu dem Griffpunkt-Kandidaten ausgehend von einer momentanen Position des Roboters. Insofern kann das Auswählen eines Griffpunkt-Kandidaten als Zielgriffpunkt in Abhängigkeit davon erfolgen, wie lange der Roboter für eine Verlagerungsbewegung des Endeffektors zu einem Griffpunkt-Kandidaten ausgehend von einer momentanen Position braucht. Insbesondere kann derjenige Griffpunkt-Kandidat aus der Menge Mₛ an Griffpunkt-Kandidaten als nächsten Zielgriffpunkt ausgewählt werden, für welchen eine Anfahrzeit des Roboters minimal ist.
- Abstand des Griffpunkt-Kandidaten zu einer momentanen Position des Endeffektors des wenigstens einen Roboters. Insofern kann das Auswählen eines Griffpunkt-Kandidaten als Zielgriffpunkt in Abhängigkeit davon erfolgen, wie weit ein Griffpunkt-Kandidat von einer momentanen Position des Endeffektors entfernt ist. Insbesondere kann derjenige Griffpunkt-Kandidat aus der Menge Mₛ als nächster Zielgriffpunkt ausgewählt werden, welcher den geringsten Abstand zu dem Endeffektor aufweist.
- Abstand des Griffpunkt-Kandidaten zu dem letzten oder den letzten n als Zielgriffpunkt ausgewählten Griffpunkt-Kandidaten. Insofern kann das Auswählen eines Griffpunkt-Kandidaten als Zielgriffpunkt in Abhängigkeit davon erfolgen, wie weit ein Griffpunkt-Kandidat von den letzten 1 bis n als Zielgriffpunkt ausgewählten Griffpunkt-Kandidaten entfernt liegt. Insbesondere kann ein Griffpunkt-Kandidat dann bevorzugt als nächster Zielgriffpunkt ausgewählt werden, wenn ein Abstand dieses Griffpunkt-Kandidaten zu dem letzten als Zielgriffpunkt ausgewählten Griffpunkt-Kandidaten größer als ein vorgegebener Schwellwert ist, insbesondere maximal ist. Auf diese Weise kann das Risiko minimiert werden, dass der nun ausgewählte Griffpunkt-Kandidat nicht mehr verfügbar ist, da bspw. der Gegenstand durch den zuvor durchgeführten Handhabungsprozess verrutsch oder umgekippt ist. Es ist auch denkbar, dass ein Griffpunkt-Kandidat dann bevorzugt als Zielgriffpunkt ausgewählt wird, wenn ein Abstand zu den letzten Zielgriffpunkt minimal ist.
- Griffpunkt-Kandidat liegt auf einer vorgegebenen Bewegungsbahn des Roboters innerhalb des Arbeitsbereichs (Depalletierung gemäß vorgegebener Reihenfolge).

Im Rahmen einer vorteilhaften Weiterbildung können die im Griffpunkt-Speicher gespeicherten Griffpunkt-Kandidaten mittels der Datenverarbeitungsanlage bewertet und in Abhängigkeit der Bewertung in einer Rangliste sortiert werden. Dann ist es denkbar, dass das Auswählen eines Griffpunkt-Kandidaten aus der Menge Mₛ an Griffpunkt-Kandidaten als Zielgriffpunkt in Abhängigkeit einer Position des Griffpunkt-Kandidaten in der Rangliste erfolgt. Insbesondere kann der am höchsten (besten) bewertete, insbesondere in der Rangliste oberste, Griffpunkt-Kandidat als nächster Zielgriffpunkt ausgewählt werden. Eine solche Ausgestaltung ermöglicht es, Griffpunkt-Kandidaten zu priorisieren und somit eine Effizienz des Handhabungsvorganges weiter zu verbessern.

Insbesondere kann die Bewertung der im Griffpunkt-Speicher gespeicherten Griffpunkt-Kandidaten anhand einer oder mehrerer der folgenden Bewertung-Kriterien erfolgen.
- Anzahl der wiederholten Ermittlung des Griffpunkt-Kandidaten im Rahmen aufeinanderfolgender Handhabungszyklen. Insofern kann eine Bewertung eines Griffpunkt-Kandidaten in Abhängigkeit davon erfolgen, wie oft der Griffpunkt-Kandidat im Rahmen aufeinanderfolgende Handhabungszyklen ermittelt wurde. Insbesondere kann eine größere Anzahl an wiederholten Ermittlungen zu einer besseren Bewertung, insbesondere einer höheren Position in der Rangliste, führen.
- Abstand des Griffpunkt-Kandidaten zu den letzten 1 bis n als Zielgriffpunkt ausgewählten Griffpunkt-Kandidaten (n ist eine natürliche Zahl). Insbesondere können Griffpunkt-Kandidaten dann besser bewertet, also höher priorisiert werden, wenn ein Abstand des Griffpunkt-Kandidaten zu dem letzten als Zielgriffpunkt ausgewählten Griffpunkt-Kandidaten größer als ein vorgegebener Schwellwert ist, insbesondere maximal ist. Auf diese Weise kann das Risiko weiter minimiert werden, dass ein als nächster Zielgriffpunkt ausgewählter Griffpunkt-Kandidat nicht mehr verfügbar ist, da bspw. der Gegenstand durch den zuvor durchgeführten Handhabungsprozess verrutsch oder umgekippt ist. Es ist grundsätzlich auch denkbar, dass ein Griffpunkt-Kandidat dann höher priorisiert wird, wenn ein Abstand zu den letzten Zielgriffpunkt minimal ist..
- Bereits verstrichene Verweilzeit des Griffpunkt-Kandidaten im Griffpunkt-Speicher. Insofern kann eine Bewertung eines Griffpunkt-Kandidaten in Abhängigkeit davon erfolgen, wie lange ein Griffpunkt-Kandidat bereits im Griffpunkt-Speicher gespeichert ist. Insbesondere können Griffpunkt-Kandidaten dann besser bewertet, also höher priorisiert werden, wenn eine Verweilzeit vergleichsweise kurz ist (sie also relativ "neu" sind).
- Position (Koordinaten) und/oder Orientierung des Griffpunkt-Kandidaten in einem Koordinatensystem der Handhabungsanlage. Wie vorstehend erwähnt, können Griffpunkt-Kandidaten beispielsweise dann besser bewertet werden, also höher priorisiert, wenn sie entlang eines vorgegebenen Bewegungspfades des Roboters in dem Arbeitsbereich hintereinanderliegen. Auf diese Weise ist bspw. ein geordnetes Leeren des Arbeitsbereichs nach einem vorgegebenen Muster ermöglicht (Depalletierungsstrategie).

Es ist denkbar, dass eine Bewertung der Griffpunkt-Kandidaten nur anhand eines einzelnen Bewertung-Kriteriums erfolgt. Es ist auch denkbar, dass eine Bewertung der Griffpunkt-Kandidaten anhand mehrerer Bewertung-Kriterien erfolgt. In letzterem Fall kann es möglich sein, dass die Bewertung-Kriterien oder zumindest eine Teilmenge der mehreren Bewertungs-Kriterien unterschiedlich stark gewichtet sind. Insbesondere kann eine Gewichtung der Bewertung-Kriterien veränderbar, insbesondere einstellbar, sein. Auf diese Weise kann eine Handhabungsstrategie beeinflusst werden.

Im Rahmen einer vorteilhaften Weiterbildung kann die Handhabungsanlage eine Mehrzahl von unterschiedlichen Endeffektoren umfassen, welche wahlweise an den wenigstens einen Roboter ankoppelbar sind. Beispielsweise kann die Handhabungsanlage Sauggreifer unterschiedlicher Größe oder unterschiedlicher Beschaffenheit aufweisen. In diesem Zusammenhang kann es vorteilhaft sein, wenn das Ermitteln der Griffpunkt-Kandidaten das Ermitteln eines bevorzugten Endeffektors zum Greifen des entsprechenden Gegenstands an diesem Griffpunkt-Kandidaten umfassen. Insofern kann für jeden Griffpunkt-Kandidaten ermittelt werden, mit welchem der mehreren Endeffektoren der jeweilige Gegenstand am besten gegriffen werden kann. Das Ausführen der Handhabungsaufgabe kann dann das Bereitstellen des für den als Zielgriffpunkt ausgewählten Griffpunkt-Kandidaten bevorzugten Endeffektors an dem wenigstens einen Roboter umfassen. Es ist denkbar, dass dieser Endeffektor bereits an dem Roboter vorgesehen ist (bspw., weil in einem Handhabungszyklus zuvor der gleiche Endeffektor als bevorzugt ermittelt wurde). Es ist auch denkbar, dass das Ausführen der Handhabungsaufgabe das, insbesondere automatisierte, Wechseln des Endeffektors umfasst.

Das Ermitteln des bevorzugten Endeffektors für einen Griffpunkt-Kandidaten kann beispielsweise in Abhängigkeit eines oder mehrerer der folgenden Randbedingungen erfolgen:
- Koordinaten (Position) und/oder Orientierung des Griffpunkt-Kandidaten in einem Koordinatensystem der Handhabungsanlage. Beispielweise ist es denkbar, dass für in einem Eckbereich des Arbeitsbereichs, bzw. Quellbehälters, angeordnete Gegenstände ein kleinerer Endeffektor bevorzugt ist.
- Gewicht des zu greifenden Gegenstandes. Insbesondere kann ein solcher Endeffektor ausgewählt werden, welche die erforderliche Greifkraft bereitstellt.
- Oberflächenbeschaffenheit des Gegenstands.

Das Ermitteln der Menge Mₑ an Griffpunkt-Kandidaten umfasst vorzugsweise das Analysieren des wenigstens einen Bildes des Arbeitsbereichs mittels wenigstens eines auf der Datenverarbeitungsanlage ablaufenden Auswertealgorithmus (Computerprogramm). Der wenigstens eine Auswertealgorithmus kann insbesondere Methoden der Bildbearbeitung umfassen. Solche Auswertealgorithmen sind grundsätzlich aus dem Stand der Technik bekannt.

Im Rahmen einer vorteilhaften Weiterbildung kann das Ermitteln der Menge Mₑ an Griffpunkt-Kandidaten das, insbesondere parallele, Analysieren des wenigstens einen Bildes des Arbeitsbereichs mittels verschiedener auf der Datenverarbeitungsanlage ablaufender Auswertealgorithmen umfassen. Auf diese Weise ist es möglich, Schwächen eines Algorithmus durch die Stärken eines anderen Algorithmus auszugleichen. Beispielsweise ist es denkbar, dass unterschiedlich schnelle und/oder unterschiedlich präzise Auswertealgorithmen parallel ablaufen. Auf diese Weise kann bspw. besonders schnell ein erster Griffpunkt-Kandidat bereitgestellt sein, sodass der Roboter mit der Durchführung der Handhabungsaufgabe beginnen kann. Die langsameren aber gegebenenfalls präziseren Auswertealgorithmen können dann weitere Griffpunkt-Kandidaten nachliefern, während der Roboter bereits die eine erste Handhabungsaufgabe ausführt.

Insbesondere kann jeder dieser Auswertealgorithmen eine Teilmenge Mₜ an Griffpunkt-Kandidaten ermitteln. Eine Summe der Teilmengen Mₜ kann dann die Menge Mₑ an ermittelten Griffpunkt-Kandidaten bilden. Es ist denkbar, dass die Teilmengen überlappenden Inhalt haben, also die Auswertealgorithmen teilweise die gleichen Griffpunkt-Kandidaten ermitteln. Ein solcher mehrfach ermittelter Griffpunkt-Kandidat wird dann insbesondere nur einmal in dem Griffpunkt-Speicher abgespeichert. Insbesondere kann das Ermitteln eines Griffpunkt-Kandidaten mittels mehrerer Auswertealgorithmen ein weiteres Bewertungs-Kriterium zur Bewertung bzw. Priorisierung von Griffpunkt-Kandidaten bilden.

Wie vorstehend erwähnt, können die Auswertealgorithmen unterschiedlich schnell sein. Insofern kann das Ermitteln der Teilmengen Mₜ zu unterschiedlichen Zeitpunkten beendet sein.

Im Rahmen einer vorteilhaften Weiterbildung kann die Detektionseinrichtung eine Mehrzahl von Erfassungseinheiten umfassen. Die Erfassungseinheiten können jeweils dazu ausgebildet sein, den Arbeitsbereich bildlich zu erfassen. In diesem Zusammenhang kann es vorteilhaft sein, wenn das Erfassen des wenigstens einen Bildes des Arbeitsbereichs das, insbesondere gleichzeitige, jeweilige Erfassen wenigstens eines Bildes des Arbeitsbereichs durch die einzelnen Erfassungseinheiten umfasst. Insofern können die Erfassungseinheiten parallel jeweils wenigstens ein Bild des Arbeitsbereichs aufnehmen.

Es ist denkbar, dass die Bilder der Erfassungseinheiten durch den gleichen Auswertealgorithmus analysiert werden. Es ist auch denkbar, dass die Bilder der unterschiedlichen Erfassungseinheiten auch durch unterschiedliche Auswertealgorithmen analysiert werden.

Bei manchen Ausgestaltungen kann die Handhabungsanlage mehrere Roboter umfassen. Dann kann für jeden Endeffektor ein eigener Zielgriffpunkt aus der Menge Mₛ von in dem Griffpunkt-Speicher gespeicherten Griffpunkt-Kandidaten ausgewählt werden. Mit anderen Worten können den Robotern aus einem gemeinsamen "Pool" von Griffpunkt-Kandidaten jeweilige Zielgriffpunkte zugewiesen werden. Das Durchführen der Handhabungsaufgabe kann dann das Anfahren eines jeweiligen Endeffektors an den für ihn ausgewählten Zielgriffpunkt umfassen.

Wie vorstehend erwähnt, kann das Ausführen der Handhabungsaufgabe außerdem das Verbringen eines an dem Zielgriffpunkt gegriffenen Gegenstands an einen Zielablageort in einem Zielbereich, insbesondere Zielbehälter, umfassen. Insbesondere kann die Handhabungsanlage außerdem einen Zielbereich, insbesondere Zielbehälter, zur Aufnahme von Gegenständen umfassen. Die Detektionseinrichtung kann dann vorzugweise wenigstens eine Erfassungseinheit, insbesondere Kamera, umfassen, welche dazu ausgebildet ist, den Zielbereich, insbesondere Zielbehälter, und optional bereits darin aufgenommene Gegenstände bildlich zu erfassen. Es ist denkbar, dass der Arbeitsbereich und der Zielbereich mittels der gleichen wenigstens einen Erfassungseinheit erfassbar sind. Es ist auch denkbar, dass für den Arbeitsbereich und den Zielbereich jeweils wenigstens eine eigene Erfassungseinheit vorgesehen ist.

Ein jeweiliger Handhabungszyklus kann außerdem umfassen:
- Erfassen wenigstens eines Bildes des Zielbereichs mittels Detektionseinrichtung;
- Ermitteln, auf Basis des wenigstens einen Bildes des Zielbereichs, eines oder mehrerer Ablageort-Kandidaten, an welchen ein Gegenstand abgelegt werden kann. Die ermittelten Ablageort-Kandidaten bilden insbesondere eine Menge Mₐ.
- Speichern zumindest einer Teilmenge Mₐₛ der Ablageort-Kandidaten der Menge Mₐ an ermittelten Ablageort-Kandidaten in einem Ablageort-Speicher der nicht-flüchtigen Speichereinrichtung
- Auswählen, mittels der Datenverarbeitungsanlage, eines Ablageort-Kandidaten aus einer Menge Mₛₐ von in dem Ablageort-Speicher gespeicherten Ablageort-Kandidaten als Zielablageort für einen Gegenstand, insbesondere den gegriffenen oder zu greifenden Gegenstand. Die Menge Mₛₐ der im Ablageort-Speicher gespeicherten Ablageort-Kandidaten umfasst insbesondere die Teilmenge Mₐₛ.

Die vorstehend in Bezug auf das Ermitteln, Speichern und Aussortieren der Griffpunkt-Kandidaten beschriebenen Vorteile und Merkmale können in analoger Weise zur Ausgestaltung des Ermittelns, Speicherns und Aussortierens von Ablageort-Kandidaten dienen. Insofern können Speicherkriterien und/oder Aussortierkriterien für die Ablageort-Kandidaten vorgegeben werden. Insbesondere umfasst das Ermitteln der Ablageort-Kandidaten das Analysieren des wenigstens einen Bildes des Zielbereichs mittels wenigstens eines auf der Datenverarbeitungsanlage ablaufenden Auswertealgorithmus.

Es ist grundsätzlich auch denkbar, dass in einem jeweiligen Handhabungszyklus ausschließlich Ablageort-Kandidaten ermittelt und gespeichert werden, nicht jedoch die vorstehend beschriebenen Griffpunkt-Kandidaten.

Die vorstehend genannte Aufgabe wird auch durch eine Handhabungsanlage gelöst, welche dazu ausgebildet ist, eines der vorstehend beschriebenen Verfahren auszuführen. Insofern ist die Handhabungsanlage zum Handhaben von in einem Arbeitsbereich angeordneten Gegenständen ausgebildet. Die Handhabungsanlage umfasst wenigstens einen Roboter, an dem ein Endeffektor zum Greifen eines Gegenstands angeordnet ist. Die Handhabungsanlage umfasst außerdem eine Detektionseinrichtung, umfassend wenigstens eine Erfassungseinheit, insbesondere Kamera, welche dazu ausgebildet ist, den Arbeitsbereich, insbesondere Quellbehälter, und/oder einen Zielbereich, insbesondere Zielbehälter, bildlich zu erfassen. Die Handhabungsanlage umfasst außerdem eine Steuereinrichtung zum Ansteuern der Handhabungsanlage, insbesondere zum Ansteuern des Roboters und der Detektionseinrichtung. Die Steuereinrichtung umfasst eine Datenverarbeitungsanlage und eine nicht-flüchtige Speichereinrichtung.

Die Steuereinrichtung ist dazu ausgebildet, eines der vorstehend beschriebenen Verfahren durchzuführen. Insofern sind in der nicht-flüchtigen Speichereinrichtung insbesondere Steueranweisungen bzw. Befehle gespeichert, welche bei Ausführung auf der Datenverarbeitungsanlage der Steuereinrichtung diese dazu veranlassen, eines der vorstehend beschriebenen Verfahren durchzuführen.

Die Handhabungsanlage kann außerdem den vorstehend beschriebenen Arbeitsbereich umfassen. Insbesondere kann die Handhabungsanlage einen Arbeitsbereich mit einer Mehrzahl von darin angeordneten Gegenständen umfassen. Die Handhabungslage kann außerdem den vorstehend beschriebenen Zielbereich, insbesondere Zielbehälter, umfassen.

Die vorstehend im Zusammenhang mit dem Verfahren beschriebenen Vorteile und optionalen Merkmale können auch zur Ausgestaltung der Handhabungsanlage dienen, sodass zur Vermeidung von Wiederholungen auf vorstehende Offenbarung hierzu verwiesen wird

Die Erfindung wird im Folgenden anhand der Figuren näher erläutert. Es zeigen:
- Figur 1: vereinfachte schematische Darstellung einer Ausgestaltung einer Handhabungsanlage in einer Draufsicht;
- Figur 2: vereinfachte schematische Darstellung einer weiteren Ausgestaltung einer Handhabungsanlage in einer Draufsicht;
- Figur 3: vereinfachte schematische Darstellung einer weiteren Ausgestaltung einer Handhabungsanlage in einer Draufsicht;
- Figur 4: Schaubild zur Erläuterung eines beispielhaften Verfahrens zum Betreiben der Handhabungsanlage; und
- Figur 5: Schaubild zur Erläuterung einer Griffpunkt-Ermittlung mittels mehrerer Auswertealgorithmen.

In der nachfolgenden Beschreibung sowie in den Figuren sind für identische oder einander entsprechende Merkmale jeweils dieselben Bezugszeichen verwendet.

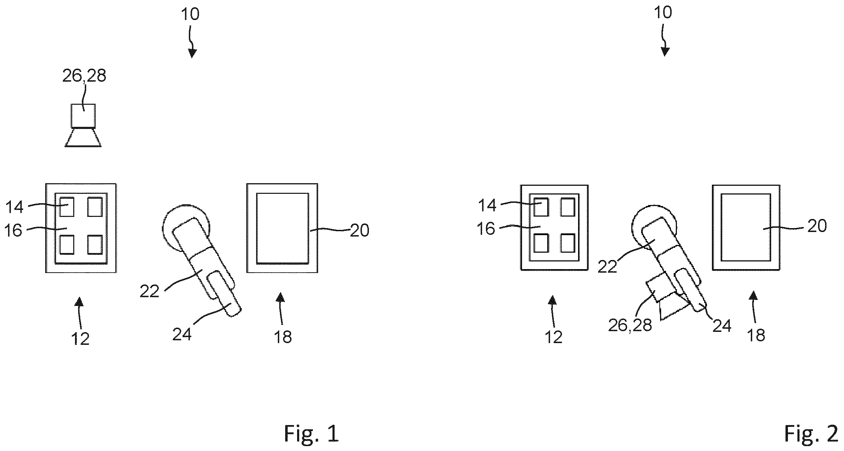

Die Figur 1 zeigt in vereinfachter schematischer Darstellung eine Ausgestaltung einer Handhabungsanlage, welche insgesamt mit dem Bezugszeichen 10 bezeichnet ist.

Die Handhabungsanlage 10 umfasst im Beispiel einen Arbeitsbereich 12, in welchem eine Mehrzahl von Gegenständen 14 angeordnet ist. Im konkreten Beispiel ist der Arbeitsbereich 12 durch einen Quellbehälter 16 gebildet, in welchem die Gegenstände 14 aufgenommen sind.

Die Handhabungsanlage 10 umfasst im Beispiel außerdem einen Zielbereich 18, in welchen die Gegenstände 14 im Rahmen eines nachfolgend beschriebenen Handhabungsprozesses überführt werden sollen. Der Zielbereich 18 ist im Beispiel durch einen Zielbehälter 20 zur Aufnahme der Gegenstände 14 gebildet.

Die Handhabungsanlage 10 umfasst außerdem einen Roboter 22. Der Roboter 22 ist beispielhaft als Industrieroboter ausgebildet. Wie vorstehend erwähnt, kann der Roboter 22 beispielsweise als Mehr-Achs-Roboter, Scara-Roboter oder kollaborierender Roboter ausgebildet sein. Es sind aber auch beliebige andere Ausgestaltung des Roboters 22 denkbar.

Der Roboter 22 ist dazu ausgebildet, Gegenstände 14 aus dem Arbeitsbereich 12 (Quellbehälter 16) in den Zielbereich 18 (Zielbehälter 20) zu überführen.

An dem Roboter 22 ist ein Endeffektor 24 zum Greifen eines Gegenstands 14 angeordnet. Beispielhaft kann es sich bei dem Endeffektor 24 um einen Sauggreifer handeln.

Die Handhabungsanlage 10 umfasst außerdem eine Detektionseinrichtung 26 welche dazu ausgebildet ist, den Arbeitsbereich 12 (Quellbehälter 16) zu detektieren. Im konkreten Beispiel umfasst die Detektionseinrichtung 26 eine Erfassungseinheit 28, insbesondere Kamera, welche dazu ausgebildet ist, den Arbeitsbereich 12 und die darin angeordneten Gegenstände 14 bildlich zu erfassen. Bei nicht dargestellten Ausgestaltungen ist es auch denkbar, dass die Detektionseinrichtung 26 eine weitere Erfassungseinheit 28 aufweist, welche dazu ausgebildet ist, den Zielbereich 18, insbesondere den Zielbehälter 20, bildlich zu erfassen.

Die Handhabungsanlage 10 umfasst außerdem eine Steuereinrichtung (nicht dargestellt), welche dazu ausgebildet ist, den Roboter 22 und die Detektionseinrichtung 26 anzusteuern. Wie vorstehend erwähnt, umfasst die Speichereinrichtung eine Datenverarbeitungsanlage und eine nicht-flüchtige Speichereinrichtung.

Die Figur 2 zeigt eine weitere beispielhafte Ausgestaltung einer Handhabungsanlage 10, welche sich von der in Figur 1 gezeigten Ausgestaltung lediglich dahingehend unterscheidet, dass die Detektionseinrichtung 26 bzw. die Erfassungseinheit 28 an dem Roboter 22 gehaltert ist und somit durch den Roboter 22 verlagerbar ist. Auf diese Weise kann die Erfassungseinheit 28 sowohl den Arbeitsbereich 12 (Quellbehälter 16) erfassen (insbesondere dann, wenn der Roboter 22 dem Arbeitsbereich 12 zugewandt ist) als auch den Zielbereich 18 (Zielbehälter 20) erfassen (insbesondere dann, wenn der Roboter 22 dem Zielbereich 18 zugewandt ist. Im Übrigen entspricht die Ausgestaltung der Handhabungsanlage 10 gemäß Figur 2 derjenigen gemäß Figur 1, sodass zur Vermeidung von Wiederholungen auf vorstehende Beschreibung verwiesen wird.

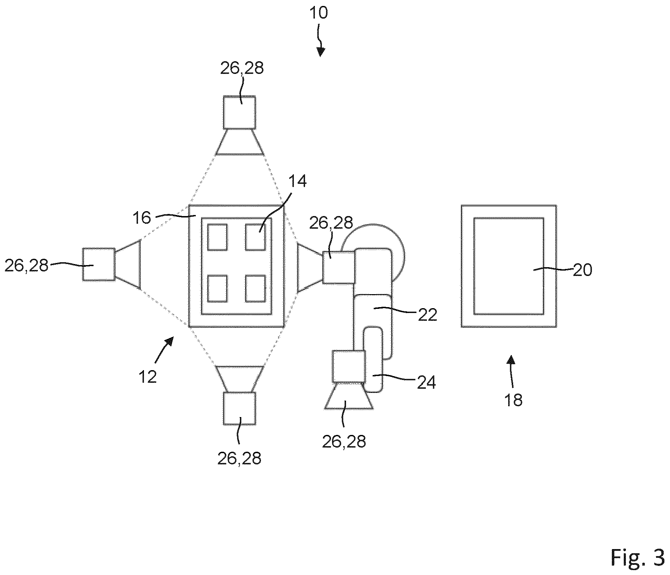

Die Figur 3 zeigt eine weitere beispielhafte Ausgestaltung einer Handhabungsanlage 10, welche sich von der in Figur 2 gezeigten Handhabungsanlage 10 lediglich dadurch unterscheidet, dass die Detektionseinrichtung 26 eine Mehrzahl von Erfassungseinheiten 28 aufweist. Im konkreten Beispiel umfasst die Detektionseinrichtung 26 zusätzlich zu der in Fig. 2 gezeigten Erfassungseinheit 28 weitere, insbesondere ortsfeste, Erfassungseinheiten 28, welche dazu ausgebildet sind, den Arbeitsbereich 12 bildlich zu erfassen. Bei nicht dargestellten Ausgestaltungen ist es auch denkbar, dass die Detektionseinrichtung 26 zusätzlich oder alternativ eine Mehrzahl von Erfassungseinheiten 28 umfasst, welche dazu ausgebildet sind, den Zielbereich 18 (Zielbehälter 20) bildlich zu erfassen. Im Übrigen entspricht die Ausgestaltung der Handhabungsanlage 10 gemäß Figur 3 derjenigen gemäß Figur 2, sodass zur Vermeidung von Wiederholungen auf vorstehende Beschreibung verwiesen wird.

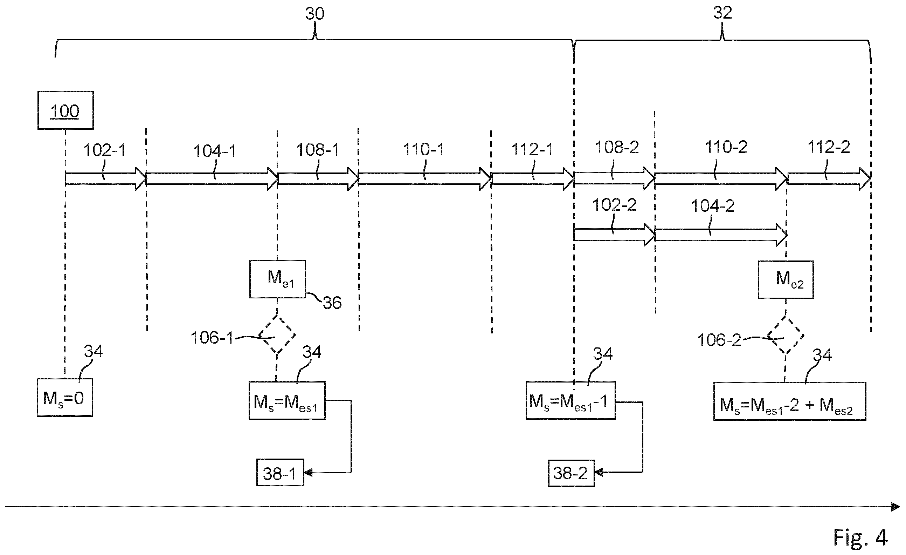

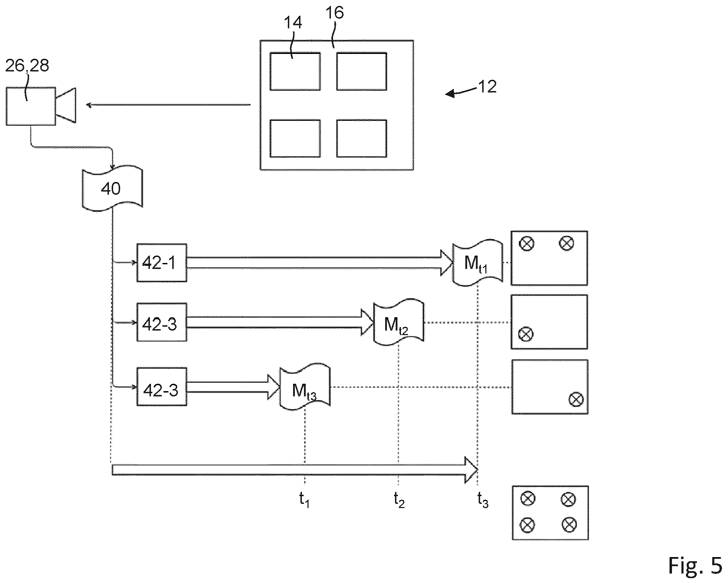

Im Folgenden wird unter Bezugnahme auf die Figuren 4 und 5 ein beispielhaftes Verfahren zum Betreiben der Handhabungsanlage beschrieben.

Gemäß dem Verfahren werden die Gegenstände 14 nacheinander aus dem Arbeitsbereich 12 (Quellbehälter 16) in den Zielbereich 18 (Zielbehälter 20) überführt. Hierzu führt der Roboter 22 eine Mehrzahl von Handhabungsaufgaben auf, welche jeweils das Anfahren des Endeffektors 24 an einen zu greifenden Gegenstand 14 in dem Arbeitsbereich 12, das Greifen dieses Gegenstands 14, das Überführen des Gegenstands 14 in den Zielbereich 18 und das Ablegen des Gegenstands 14 an einem Zielablageort in dem Zielbereich 18 umfassen.

Wie vorstehend erwähnt, greift der Endeffektor 24 die Gegenstände 14 jeweils an einem Griffpunkt, welcher zuvor mittels der Steuereinrichtung ausgewählt wurde.

Im konkreten wird in jedem Handhabungszyklus ein Zielgriffpunkt aus einer Menge Mₛ an Griffpunkt-Kandidaten ausgewählt, welche in einem Griffpunkt-Speicher der nicht-flüchtigen Speichereinrichtung gespeichert sind. Im Anschluss wird der Roboter 22 auf Basis des ausgewählten Zielgriffpunkt angesteuert, sodass dieser den Endeffektor 24 an den Zielgriffpunkt verlagert.

Der Griffpunkt-Speicher wird insbesondere in jedem Handhabungszyklus aktualisiert, indem neu ermittelte oder aktualisierte Griffpunkt-Kandidaten hinzugefügt werden und optional bereits abgespeicherte Griffpunkt-Kandidaten wieder entfernt werden. Im Konkreten wird in jedem Handhabungszyklus wenigstens ein Bild des Arbeitsbereichs 12 und der darin aufgenommenen Gegenstände 14 mittels der wenigstens einen Erfassungseinheit 28 aufgenommen. Dieses wenigstens eine Bild wird sodann mittels der Steuereinrichtung analysiert und potentielle Griffpunkte an den Gegenständen 14 (sogenannte Griffpunkt-Kandidaten) ermittelt. Hierzu wird das wenigstens eine Bild mittels eines auf der Datenverarbeitungsanlage der Speichereinrichtung ablaufenden Auswertealgorithmus analysiert. Die so in einem Handhabungszyklus ermittelten Griffpunkt-Kandidaten bilden eine Menge Mₑ an ermittelten Griffpunkt-Kandidaten.

Die Menge Mₑ an ermittelten Griffpunkt-Kandidaten kann sodann in dem Griffpunkt-Speicher abgespeichert werden. Vorzugsweise werden jedoch nur solche Griffpunkt-Kandidaten aus der Menge Mₑ in dem Griffpunkt-Speicher abgespeichert, welche ein vorgegebenes Speicherkriterium oder wenigstens eines von mehreren vorgegebenen Speicherkriterien erfüllt. Insofern kann in einem optionalen weiteren Schritt des Verfahrens für jeden Griffpunkt-Kandidaten aus der Menge Mₑ der ermittelten Griffpunkt-Kandidaten geprüft werden, ob dieser Griffpunkt-Kandidat das vorgegebene Speicherkriterium oder wenigstens eins oder alle von mehreren vorgegebenen Speicherkriterien erfüllt. Ist dies der Fall, wird dieser Griffpunkt-Kandidat in dem Griffpunkt-Speicher der nicht-flüchtigen Speichereinrichtung gespeichert. Ist dies nicht der Fall, wird dieser Griffpunkt-Kandidat insbesondere verworfen, insbesondere nicht gespeichert.

Wie vorstehend erwähnt, kann beispielsweise geprüft werden, ob ein neu ermittelter Griffpunkt-Kandidat bereits zuvor in dem Griffpunkt-Speicher abgespeichert wurde und/oder zuvor als Zielgriffpunkt ausgewählt wurde.

Wie vorstehend erwähnt, kann außerdem in jedem Handhabungszyklus, oder auch kontinuierlich, geprüft werden, ob die in dem Griffpunkt-Speicher gespeicherten Griffpunkt-Kandidaten ein vorgegebenes Aussortierkriterium oder eines oder mehrere von vorgegebenen mehreren Aussortierkriterien erfüllen. Ist dies der Fall, wird der dieser Griffpunkt-Kandidat aus dem Griffpunkt-Speicher entfernt.

Das vorstehend skizzierte Verfahren wird nachfolgend anhand einer beispielhaften Anwendungssituation unter Bezugnahme auf die Figur 4 im Detail erläutert. Die Figur 4 visualisiert schematisch die einzelnen Verfahrensschritte eines beispielhaften Handhabungsvorgangs umfassend einen ersten Handhabungszyklus 30 und einen zweiten, darauffolgenden Handhabungszyklus 32. In dem Beispiel handelt es sich bei dem ersten Handhabungszyklus 30 um den allerersten Handhabungszyklus einer Mehrzahl von Handhabungszyklen.

Der Griffpunkt-Speicher ist in der Figur 4 in der unteren Zeile durch das mit Bezugszeichen 34 bezeichnete Kästchen visualisiert.

In einer Ausgangskonfiguration 100 befindet sich der Roboter 22 in einer Ausgangsstellung, in welcher die Erfassungseinheit 28 ein Bild des Arbeitsbereichs 12 aufnehmen kann. Bei einer Ausgestaltung der Handhabungsanlage 10 gemäß Figur 1 kann sich der Roboter 22 beispielsweise in einer Zwischenstellung zwischen Arbeitsbereich 12 und Zielbereich 18 befinden (vgl. Fig. 1). Bei einer Ausgestaltung der Handhabungsanlage 10 gemäß Figur 2 kann der Roboter 22 insbesondere dem Arbeitsbereich 12 zugewandt sein, sodass die mit dem Roboter 22 bewegungsgekoppelte Erfassungseinheit 28 den Arbeitsbereich 12 bildlich erfassen kann.

Zu diesem Zeitpunkt 100 ist der Griffpunkt-Speicher 34 insbesondere leer (da noch kein Handhabungszyklus stattgefunden hat). Eine Menge Mₛ an in dem Griffpunkt-Speicher 34 gespeicherten Griffpunkt-Kandidaten hat somit insbesondere keinen Inhalt.

In einem ersten Verfahrensschritt 102-1 wird sodann wenigstens ein Bild des Arbeitsbereichs 12 mittels der Erfassungseinheit 28 aufgenommen.

Das wenigstens eine Bild wird sodann in einem weiteren Schritt 104-1 mittels des vorstehend erwähnten wenigstens einen Auswertealgorithmus analysiert und eine Menge Mₑ₁ an Griffpunkt-Kandidaten ermittelt (in Fig. 4 durch das mit Bezugszeichen 36 bezeichnete Kästchen veranschaulicht).

In einem optionalen Prüfschritt 106-1 wird für jeden Griffpunkt-Kandidaten der Menge Mₑ₁ an ermittelten Griffpunkt-Kandidaten geprüft, ob dieser Griffpunkt-Kandidat ein vorgegebenes Speicherkriterium erfüllt oder nicht. Ist dies der Fall, wird dieser Griffpunkt-Kandidat in dem Griffpunkt-Speicher 34 abgespeichert. Ist dieser Prüfschritt für alle Griffpunkt-Kandidaten der Menge Mₑ₁ durchgeführt, setzt sich die Menge Mₛ nun zumindest aus einer Teilmenge Mₑₛ₁ der Menge Mₑ₁ zusammen. Es ist grundsätzlich auch denkbar, dass alle Griffpunkt-Kandidaten der Menge Mₑ₁ das Speicherkriterium erfüllen. Dann entspricht die Menge Mₛ zu diesem Zeitpunkt insbesondere der Menge Mₑ₁.

Aus der Menge Mₛ an gespeicherten Griffpunkt-Kandidaten wird sodann ein Griffpunkt-Kandidat als Zielgriffpunkt 38-1 ausgewählt (in Fig. 4 durch das mit Bezugszeichen 38-1 bezeichnete Kästen veranschaulicht).

Wie vorstehend erwähnt, können die im Griffpunkt-Speicher abgespeicherten Griffpunkt-Kandidaten bewertet und in Abhängigkeit einer Bewertung in einer Rangliste sortiert werden. Dann kann insbesondere derjenige Griffpunkt-Kandidat als nächster Zielgriffpunkt ausgewählt werden, welcher in der Rangliste ganz oben steht.

Sodann wird der Roboter 22 derart angesteuert, dass dieser mit dem Endeffektor 24 den Zielgriffpunkt 38-1 anfährt und der Endeffektor 24 den entsprechenden Gegenstand 14 an dem Zielgriffpunkt 38-1 angreift (Schritt 108-1 in Figur 4).

Der Endeffektor 24 wird sodann mit dem gegriffenen Gegenstand 14 mittels des Roboters 22 zu dem Zielbereich 18 verlagert und der Gegenstand 14 dort an einem Zielablageort abgelegt (Schritt 110-1 in Figur 4). Wie vorstehend erwähnt, kann der Zielablageort zuvor aus einem von der Detektionseinrichtung 26 erfassten Bildes des Zielbereichs 18 ermittelt worden sein.

Sodann verfährt der Roboter 22 wieder in eine Roboterstellung, in welcher die Erfassungseinheit 28 den Arbeitsbereich 12 bildlich erfassen kann (Schritt 112-1), bspw. in die vorhin erwähnte Ausgangsstellung.

Im Gegensatz zu dem ersten Handhabungszyklus 30 (im Beispiel der allererste Handhabungszyklus) liegen aber nun bereits Griffpunkt-Kandidaten in dem Griffpunkt-Speicher 34 vor. Im konkreten Beispiel setzt sich die Menge Mₛ nun insbesondere aus der Menge Mₑₛ₁ der im ersten Handhabungszyklus gespeicherten Griffpunkt-Kandidaten zusammen, reduziert um den zuvor als Zielgriffpunkt 38-1 ausgewählten Griffpunkt-Kandidat (also Mₛ=Mₑₛ₁-1). Wie vorstehend erwähnt, kann der bereits als Zielgriffpunkt 38-1 ausgewählte Griffpunkt-Kandidat beispielsweise in einen separaten Zielgriffpunktspeicher der Speichereinrichtung verschoben worden sein.

Der Roboter 22 muss insofern nicht zwangsläufig auf eine erneute Griffpunkt-Ermittlung warten, sondern kann in dem zweiten Handhabungszyklus 32 direkt in Abhängigkeit eines im ersten Handhabungszyklus 30 ermittelten Griffpunkt-Kandidaten angesteuert werden. Insofern wird erneut aus der Menge Mₛ (Mₛ=Mₑₛ₁-1) ein Griffpunkt-Kandidat als Zielgriffpunkt 38-2 ausgewählt und die vorstehend beschriebenen Schritte 108-1, 110-1, und 112-2 auf Basis des neuen Zielgriffpunkts 38-2 wiederholt (Schritte 108-2, 110-2, 112-2 in Fig. 4).

Währenddessen kann parallel erneut wenigstens ein Bild des Arbeitsbereichs 18 mittels der Erfassungseinheit 28 aufgenommen werden (Schritt 102-2 in Fig. 4) und auf Basis dessen eine Menge Mₑ₂ an Griffpunkt-Kandidaten ermittelt werden (Schritt 104-2 in Fig. 4).

Wie vorstehend erwähnt, kann die Detektionseinrichtung 26 auch mehrere Erfassungseinheiten 28 aufweisen (vgl. Fig. 3). Dann ist es denkbar, dass mittels der Erfassungseinheiten 28 parallel jeweils wenigstens ein Bild des Arbeitsbereichs 18 aufgenommen wird.

Erneut kann ein Prüfschritt 106-2 durchgeführt werden und diejenigen Griffpunkt-Kandidaten der Menge Mₑ₂, welche ein vorgegebenes Speicherkriterium (kann das gleiche Speicherkriterium wie im ersten Handhabungszyklus 30 sein, oder ein unterschiedliches) erfüllen, dann in dem Griffpunkt-Speicher 34 abgespeichert werden.

Der Handhabungszyklus 32 kann dann optional mehrfach wiederholt werden, insbesondere so oft, bis alle Gegenstände 14 oder eine gewünschte Anzahl der Gegenstände 14 aus dem Arbeitsbereich 12 in den Zielbereich 18 überführt sind.

Wie bei einem Vergleich des ersten und zweiten Handhabungszyklus 30, 32 in Fig. 4 ersichtlich, ist eine Gesamtdauer des zweiten Handhabungszyklus 32 durch das parallele Ermitteln der Griffpunkt-Kandidaten und der Ausführung der Handhabungsaufgabe gegenüber dem ersten Handhabungszyklus 30 verkürzt.

Die Figur 5 visualisiert in vereinfachter schematischer Darstellung eine beispielhafte Ausgestaltung des Ermittelns von Griffpunkt-Kandidaten mittels mehrerer, insbesondere parallel ablaufender, Auswertealgorithmen.

Wie vorstehend beschrieben, wird zunächst wenigstens ein Bild (in Figur 5 durch das mit Bezugszeichen 40 bezeichnete Kästchen visualisiert) des Arbeitsbereichs 12 mittels der Erfassungseinheit 28 aufgenommen.

Das wenigstens eine Bild 40 bzw. entsprechende Bilddaten, welche das Bild des Arbeitsbereichs 12 repräsentieren, wird sodann mittels mehrerer, im Beispiel drei, Auswertealgorithmen 42-1, 42-2, 42-3 analysiert, wobei jeder Auswertealgorithmus 42-1, 42-2, 42-3 eine Menge Mₜ₁, Mₜ₂, Mₜ₃ an Griffpunkt-Kandidaten ermittelt. In dem dargestellten Beispiel, überlappen die Mengen Mₜ₁, Mₜ₂, Mₜ₃ nicht, die Auswertealgorithmen haben insofern jeweils unterschiedliche Griffpunkt-Kandidaten ermittelt (im Beispiel hat der Auswertealgorithmus 42-1 Griffpunkt-Kandidaten auf den beiden oberen Gegenständen 14 identifiziert, der Auswertealgorithmus 42-2 einen Griffpunkt auf dem Gegenstand unten links identifiziert und der Auswertealgorithmus 42-3 einen Griffpunkt-Kandidat auf dem Gegenstand rechts unten identifiziert). Eine Summe der Mengen Mₜ₁, Mₜ₂, Mₜ₃ bildet dann insbesondere die vorstehend erwähnte Menge Mₑ an ermittelten Griffpunkt-Kandidaten.

Bei nicht dargestellten Ausgestaltungen, ist es auch denkbar, dass die Auswertealgorithmen 42-1, 42-2, 42-3 teilweise die gleichen Griffpunkt-Kandidaten ermitteln. Dies kann dazu genutzt werden, ermittelte Griffpunkt-Kandidaten zu priorisieren. Beispielsweise kann ein Griffpunkt-Kandidat dann höher priorisiert werden, wenn er von mehreren Auswertealgorithmen 42-1, 42-2, 42-3 ermittelt wurde. Das Ermitteln eines Griffpunkt-Kandidaten mittels mehrerer Auswertealgorithmen 42-1, 42-2, 42-3 kann insofern ein Bewertungskriterium zur Bewertung von Griffpunkt-Kandidaten bilden.

Wie in Figur 5 schematisch dargestellt, laufen die Auswertealgorithmen 42-1, 42-2, 42-3 im Beispiel unterschiedlich schnell ab, sodass das Ermitteln der Teilmengen Mₜ an Griffpunkt-Kandidaten zu unterschiedlichen Zeitpunkten t₁, t₂, t₃ beendet ist. Im konkreten Beispiel der Auswertealgorithmus 42-3 am schnellsten, sodass zu dem Zeitpunkt t₁ bereits wenigstens ein Griffpunkt-Kandidat (im Beispiel ein Griffpunkt auf dem Gegenstand 14 rechts unten) zur Verfügung steht. Insofern kann bereits zum Zeitpunkt t₁ der Roboter 22 mit einer Handhabungsaufgabe beginnen, indem er den Endeffektor 24 zu dem von dem Auswertealgorithmus 42-3 ermittelten Griffpunkt auf dem Gegenstand 14 rechts unten verlagert. Bei nicht dargestellten Ausgestaltungen ist es aber auch denkbar, dass die Auswertealgorithmen 42-1, 42-2, 42-3 gleich schnell sind.

## Patentansprüche

1. Verfahren zum Handhaben von in einem Arbeitsbereich (12), insbesondere in einem Quellbehälter (16), angeordneten Gegenständen (13) mittels einer Handhabungsanlage (10), umfassend
- wenigstens einen Roboter (22), an dem ein Endeffektor (24) zum Greifen eines Gegenstands (14) angeordnet ist;
- eine Detektionseinrichtung (26), umfassend wenigstens eine Erfassungseinheit (28), insbesondere Kamera, welche dazu ausgebildet ist, den Arbeitsbereich (12) bildlich zu erfassen,
- eine Steuereinrichtung zum Ansteuern der Handhabungsanlage (10), wobei die Steuereinrichtung eine Datenverarbeitungsanlage und eine nicht-flüchtige Speichereinrichtung umfasst;
das Verfahren umfassend das Durchführen mehrerer Handhabungszyklen nacheinander, ein jeweiliger Handhabungszyklus umfassend:
a) Erfassen wenigstens eines Bildes des Arbeitsbereichs (12) mittels der Detektionseinrichtung (26),
b) Für zumindest eine Teilmenge der in dem Arbeitsbereich (12) angeordneten Gegenstände (14): Ermitteln, auf Basis des wenigstens eines Bildes des Arbeitsbereichs (12), wenigstens eines Griffpunkt-Kandidaten, an welchem ein jeweiliger Gegenstand (14) mit dem Endeffektor (24) gegriffen werden kann, wobei die ermittelten Griffpunkt-Kandidaten eine Menge Mₑ an Griffpunkt-Kandidaten bilden;
c) Auswählen eines Griffpunkt-Kandidaten als Zielgriffpunkt (38-1, 38-2) für den Endeffektor (24) mittels der Datenverarbeitungsanlage;
d) Durchführen einer Handhabungsaufgabe, umfassend das Anfahren des Endeffektors (24) an den Zielgriffpunkt (38-1, 38-2),
**dadurch gekennzeichnet,**
**dass** zumindest eine Teilmenge Mₑₛ der Menge Mₑ an ermittelten Griffpunkt-Kandidaten in einem Griffpunkt-Speicher (34) der nicht-flüchtigen Speichereinrichtung gespeichert wird,
**dass** zumindest eine Teilmenge Mₜₑₛ der im Rahmen eines Handhabungszyklus im Griffpunkt-Speicher abgespeicherten Griffpunkt-Kandidaten Mₑₛ zumindest bis zum nächsten Handhabungszyklus, insbesondere bis zum Auswählen eines Griffpunkt-Kandidaten als Zielgriffpunkt im Rahmen des nächsten Handhabungszyklus, in dem Griffpunkt-Speicher (34) gespeichert bleiben, und
**dass** der Zielgriffpunkt (38-1, 38-2) aus einer Menge Mₛ von im Griffpunkt-Speicher (34) gespeicherten Griffpunkt-Kandidaten ausgewählt wird.

2. Verfahren nach Anspruch 1, wobei das Erfassen des wenigstens einen Bildes des Arbeitsbereichs (12) und/oder das Ermitteln der Griffpunkt-Kandidaten zeitlich überlappend mit dem Durchführen der Handhabungsaufgabe erfolgt.

3. Verfahren nach einem der vorherigen Ansprüche, wobei ein Speicherkriterium oder mehrere Speicherkriterien vorgegeben werden, wobei geprüft wird, ob die ermittelten Griffpunkt-Kandidaten Mₑ das Speicherkriterium oder wenigstens eines oder alle der mehreren Speicherkriterien erfüllen, wobei nur diejenigen Griffpunkt-Kandidaten der Menge Mₑ an ermittelten Griffpunkt-Kandidaten in dem Griffpunkt-Speicher der nicht-flüchtigen Speichereinrichtung gespeichert werden, welche das Speicherkriterium oder wenigstens eines oder alle der mehreren Speicherkriterien erfüllen, insbesondere wobei das vorgegebene Speicherkriterium eines der folgenden Speicherkriterien ist oder wobei die mehreren Speicherkriterien eines oder mehrere der folgenden Speicherkriterien umfassen:
- Griffpunkt-Kandidat wurde noch nicht im Griffpunkt-Speicher (34) gespeichert;
- Griffpunkt-Kandidat wurde noch nicht als Zielgriffpunkt (38-1, 38-2) ausgewählt;
- Griffpunkt-Kandidat liegt innerhalb eines vorbestimmten Abstands zu bereits im Griffpunkt-Speicher (34) gespeicherten Griffpunkt-Kandidaten;
- Griffpunkt-Kandidat liegt innerhalb eines vorbestimmten Abstands zu einem oder mehreren bereits als Zielgriffpunkt (38-1, 38-2) ausgewählten Griffpunkt-Kandidaten, insbesondere innerhalb eines vorbestimmten Abstands zu dem letzten als Zielgriffpunkt ausgewählten Griffpunkt-Kandidaten oder den letzten n als Zielgriffpunkt ausgewählten Griffpunkt-Kandidaten.

4. Verfahren nach einem der vorherigen Ansprüche, wobei ein Aussortierkriterium oder mehrere Aussortierkriterien vorgegeben werden, wobei ein Griffpunkt-Kandidat dann, insbesondere nur dann, aus dem Griffpunkt-Speicher (34) entfernt wird, insbesondere aus der Speichereinrichtung gelöscht oder an einen anderen Speicherort der Speichereinrichtung verschoben wird, wenn der Griffpunkt-Kandidat das vorgegebene Aussortierkriterium oder wenigstens eines oder alle der mehreren vorgegeben Aussortierkriterien erfüllt, insbesondere wobei das vorgegebene Aussortierkriterium eines der folgenden Aussortierkriterien ist oder die mehreren vorgegebenen Aussortierkriterien eines oder mehrere der folgenden Aussortierkriterien umfassen:
- Griffpunkt-Kandidat wurde bereits als Zielgriffpunkt (38-1, 38-2) ausgewählt;
- Griffpunkt-Kandidat ist bereits länger als eine vorgegebene Verfallszeit, insbesondere eine vorgegebene Anzahl an Handhabungszyklen, in dem Griffpunkt-Speicher (34) gespeichert
- Griffpunkt-Kandidat wurde in nachfolgendem Handhabungszyklus nicht mehr ermittelt.

5. Verfahren nach einem der vorherigen Ansprüche, wobei bereits als Zielgriffpunkt (38-1, 38-2) ausgewählte Griffpunkt-Kandidaten in einem Zielgriffpunktspeicher der nicht-flüchtigen Speichereinrichtung hinterlegt werden.

6. Verfahren nach einem der vorherigen Ansprüche, wobei das Auswählen eines Griffpunkt-Kandidaten aus der Menge Mₛ an Griffpunkt-Kandidaten als Zielgriffpunkt (38-1, 38-2) unter einer oder mehrerer der folgenden Randbedingungen erfolgt:
- Anfahrzeit des Roboters (22) zu dem Griffpunkt-Kandidaten ausgehend von einer momentanen Position des Roboters (22);
- Abstand des Griffpunkt-Kandidaten zu einer momentanen Position des Endeffektors (24) des wenigstens einen Roboters (22);
- Abstand des Griffpunkt-Kandidaten zu den letzten 1 bis n als Zielgriffpunkte (38-1, 38-2) ausgewählten Griffpunkt-Kandidaten;
- Position, insbesondere Koordinaten, und/oder Orientierung des Griffpunkt-Kandidaten in einem Koordinatensystem der Handhabungsanlage.

7. Verfahren nach einem der vorherigen Ansprüche, wobei die im Griffpunkt-Speicher (34) gespeicherten Griffpunkt-Kandidaten Mₛ bewertet und in Abhängigkeit der Bewertung in einer Rangliste sortiert werden, wobei das Auswählen eines Griffpunkt-Kandidaten aus der Menge Mₛ an Griffpunkt-Kandidaten als Zielgriffpunkt in Abhängigkeit einer Position des Griffpunkt-Kandidaten in der Rangliste erfolgt, insbesondere wobei die Bewertung anhand einer oder mehrerer der folgenden Bewertungskriterien erfolgt:
- Anzahl der wiederholten Ermittlung des Griffpunkt-Kandidaten im Rahmen aufeinander folgender Handhabungszyklen;
- Abstand des Griffpunkt-Kandidaten zu den letzten 1 bis n als Zielgriffpunkte ausgewählten Griffpunkt-Kandidaten;
- Verweilzeit des Griffpunkt-Kandidaten im Griffpunkt-Speicher;
- Position, insbesondere Koordinaten, und/oder Orientierung des Griffpunkt-Kandidaten in einem Koordinatensystem der Handhabungsanlage.

8. Verfahren nach dem vorherigen Anspruch, wobei mehrere Bewertungskriterien vorgegeben werden, wobei zumindest eine Teilmenge der Bewertungskriterien unterschiedlich stark gewichtet ist, wobei eine Gewichtung der Bewertungskriterien veränderbar, insbesondere einstellbar, ist.

9. Verfahren nach einem der vorherigen Ansprüche, wobei die Handhabungsanlage (10) eine Mehrzahl von unterschiedlichen Endeffektoren (24) umfasst, wobei das Ermitteln der Griffpunkt-Kandidaten das Ermitteln eines bevorzugten Endeffektors (24) zum Greifen des entsprechenden Gegenstands (14) an dem jeweiligen Griffpunkt-Kandidat umfasst, wobei das Ausführen der Handhabungsaufgabe das Bereitstellen des für den als Zielgriffpunkt (38-1, 38-2) ausgewählten Griffpunkte-Kandidaten bevorzugten Endeffektors (24) an dem wenigstens einen Roboter (22) umfasst, insbesondere wobei das Ermitteln des bevorzugten Endeffektors (24) für einen Griffpunkt-Kandidaten in Abhängigkeit eines oder mehrerer der folgenden Randbedingungen erfolgt:
- Position, insbesondere Koordinaten, und/oder Orientierung des Griffpunkt-Kandidaten in einem Koordinatensystem der Handhabungsanlage;
- Gewicht des zu greifenden Gegenstandes (14);
- Oberflächenbeschaffenheit des zu greifenden Gegenstands (14).

10. Verfahren nach einem der vorherigen Ansprüche, wobei das Ermitteln der Menge Mₑ an Griffpunkt-Kandidaten das Analysieren des wenigstens einen Bildes des Arbeitsbereichs (12) mittels wenigstens eines auf der Datenverarbeitungsanlage ablaufenden Auswertealgorithmus umfasst, insbesondere wobei der Auswertealgorithmus Methoden der Bildverarbeitung umfasst.

11. Verfahren nach einem der vorherigen Ansprüche, wobei das Ermitteln der Menge Mₑ an Griffpunkt-Kandidaten das, insbesondere parallele, Analysieren des wenigstens einen Bildes des Arbeitsbereichs (12) mittels verschiedener auf der Datenverarbeitungsanlage ablaufender Auswertealgorithmen umfasst, wobei jeder Auswertealgorithmus eine Teilmenge Mₜ an Greifpunkt-Kandidaten ermittelt, insbesondere wobei eine Summe der Teilmengen Mₜ die Menge Mₑ an Greifpunkt-Kandidaten bildet.

12. Verfahren nach einem der vorherigen Ansprüche, wobei die Detektionseinrichtung (26) eine Mehrzahl von Erfassungseinheiten (28) umfasst, wobei das Erfassen des wenigstens eines Bildes des Arbeitsbereichs (12) das, insbesondere gleichzeitige, Erfassen wenigstens eines Bildes des Arbeitsbereichs (12) durch die einzelnen Erfassungseinheiten (28) umfasst.

13. Verfahren nach einem der vorherigen Ansprüche, wobei mehrere Roboter (22) vorgesehen sind, wobei für den Endeffektor (24) eines jeweiligen Roboters (22) ein eigener Zielgriffpunkt aus der Menge Mₛ von in dem Griffpunkt-Speicher (34) gespeicherten Griffpunkt-Kandidaten ausgewählt wird, wobei das Durchführen der Handhabungsaufgabe das Anfahren eines jeweiligen Endeffektors (24) an den für ihn ausgewählten Zielgriffpunkt umfasst.

14. Verfahren nach einem der vorherigen Ansprüche, wobei das Durchführen der Handhabungsaufgabe das Verbringen des Gegenstands (14) aus dem Arbeitsbereich (12) an einen Zielablageort in einem Zielbereich (18), insbesondere Zielbehälter (20), umfasst, wobei die Detektionseinrichtung (26) dazu ausgebildet ist, den Zielbereich (18) bildlich zu erfassen, das Verfahren außerdem umfassend:
- Erfassen wenigstens eines Bildes des Zielbereichs (18) mittels der Detektionseinrichtung (26),
- Ermitteln, auf Basis des wenigstens eines Bildes des Zielbereichs (18), eines oder mehrerer Ablageort-Kandidaten, an welchem der Gegenstand (14) abgelegt werden kann, wobei die ermittelten Ablageort-Kandidaten eine Menge Mₐ bilden;
- Speichern zumindest einer Teilmenge Mₜₐₛ der Ablageort-Kandidaten der Menge Mₐ an Ablageort-Kandidaten in einem Ablageort-Speicher der nichtflüchtigen Speichereinrichtung;
- Auswählen eines Ablageort-Kandidaten aus einer Menge Mₐₛ von in dem Ablageort-Speicher gespeicherten Ablageort-Kandidaten als Zielablageort für den Gegenstand (14).

15. Handhabungsanlage (10), umfassend:
- wenigstens einen Roboter (22), an dem ein Endeffektor (24) zum Greifen eines Gegenstands angeordnet ist;
- eine Detektionseinrichtung (26), umfassend wenigstens eine Erfassungseinheit (28), insbesondere Kamera, welche dazu ausgebildet ist, den Arbeitsbereich (12) bildlich zu erfassen,
- eine Steuereinrichtung zum Ansteuern der Handhabungsanlage (10), wobei die Steuereinrichtung eine Datenverarbeitungsanlage und eine nicht-flüchtige Speichereinrichtung umfasst, wobei die Steuereinrichtung dazu eingerichtet ist, das Verfahren nach einem der vorherigen Ansprüche auszuführen.
